# EUROPÄISCHE PATENTANMELDUNG

(11) **EP 0 941 801 A2**
(43) Veröffentlichungstag der Anmeldung: **15.09.1999**
(21) Anmeldenummer: 99104161.7
(22) Anmeldetag: 02.03.1999
(51) Int. Cl.: B23Q 7/00, B21B 39/00

(54) **Verfahren und Vorrichtung zum Handhaben von Schnittlängen und Unterlängen in Feinstahladjustagen**

(30) Priorität: 07.03.1998 DE 19809918
(71) Anmelder: SMS SCHLOEMANN-SIEMAG AKTIENGESELLSCHAFT, 40237 Düsseldorf (DE)
(72) Erfinder: Hellenbrandt, Rainer, 47877 Willich (DE)
(74) Vertreter: Valentin, Ekkehard, Dipl.-Ing.

(57) **Zusammenfassung**

Die Erfindung betrifft ein Verfahren und eine Vorrichtung zum Handhaben von Schnittlängen (2) und Unterlängen (3) von vorzugsweise nicht stapelbarem Walzgut auf dem Wege zu Sammel- und Transporteinrichtungen für Bündelanlagen und Sägeeinrichtungen in Feinstahladjustagen. Die umständliche, mit Handarbeit verbundene Handhabe bisheriger Lösungen wird dadurch vermieden, dass die Schnittlängen (2) und die Unterlängen (3) auf einem gemeinsamen Transportweg (4) zu den Sammel- und Transporteinrichtungen gelangen und dass vor dem Transportweg (4) eine Sammelmulde oder Sammelroste für die Unterlängen (3) und im Transportweg (4) eine Sammelvorrichtung (6) für die Schnittlängen (2) angeordnet sind, und dass die Sammelvorrichtung (6) im Transportweg (4) versenkbar ausgebildet ist.

## Beschreibung

Die Erfindung betrifft ein Verfahren und eine Vorrichtung zum Handhaben von Schnittlängen und Unterlängen von vorzugsweise nicht stapelbarem Walzgut auf dem Wege zu Sammel- und Transporteinrichtungen für Bündelanlagen und Sägeeinrichtungen in Feinstahladjustagen.

In einem Prospekt der Firma Schloemann-Siemag AG (W3/308) ist eine Anlage für nicht stapelbares Walzgut beschrieben. Dieses wird im allgemeinen über einen Kettenquertransport der Bündel- und Bindeeinrichtung zugeführt. Zur Bestimmung des Bündelgewichtes ist innerhalb des Kettenquertransportes eine Einrichtung zum Zählen der Stäbe angeordnet. Die Stäbe werden in Bündelformern zusammengefasst, die Bündel mit Draht automatisch abgebunden, gewogen, mit Etiketten versehen und zur Verladung oder zum Fertiglager transportiert. Dies gilt jedoch alles nur für Schnittlängen. Für Unterlängen werden zusätzliche Anlagenteile und Personal benötigt. Ein automatischer Transport über die Adjustage bis zu den Bündelanlagen und den Sägeeinrichtungen ist nicht oder nur mit viel Aufwand möglich.

Es ist Aufgabe der Erfindung, ein Verfahren und eine Vorrichtung zu schaffen, die bei einer Feinstahladjustage für nicht stapelbare Walzgutlager eine Gleichbehandlung von Schnittlängen und Unterlängen gestattet.

Die Aufgabe wird dadurch gelöst, dass die Schnittlängen und die Unterlängen auf einem gemeinsamen Transportweg zu den Sammel- und Transporteinrichtungen gelangen. Auf diese Weise erfahren Schnittlängen und Unterlängen die gleiche Behandlung, d. h. den automatischen Transport über die Adjustage bis zu den Bündelanlagen und Sägeeinrichtungen. Dadurch erübrigen sich jegliche Handarbeit und personeller Mehraufwand.

Es ist vorteilhaft, wenn bei einer Vorrichtung zum Handhaben von Schnittlängen und Unterlängen von vorzugsweise nicht stapelbarem Walzgut auf dem Wege zu Sammel- und Transporteinrichtungen für Bündelanlagen und Sägeeinrichtungen in Feinstahladjustagen vor dem Transportweg eine Sammelmulde oder Sammelroste für die Unterlängen und im Transportweg eine Sammelvorrichtung für die Schnittlängen angeordnet sind und wenn die Sammelvorrichtung im Transportweg versenkbar ausgebildet ist. Durch das Versenken der Sammelvorrichtung wird der Weg für den automatischen Transport der Unterlängen über die Adjustage freigemacht und die Behandlung der Schnittlängen nur kurzzeitig unterbrochen.

Eine vorteilhafte Weiterbildung der Erfindung besteht darin, dass die Sammelvorrichtung einen winkelförmigen, nach unten und gegen die Transportrichtung schwenkbaren Sammelhebel aufweist, dessen langer Schenkel bei Sammelstellung in der Ebene des Transportweges angeordnet ist, den ein kurzer Schenkel überragt. In dem winkelförmigen Sammelhebel wird eine bestimmte Sollstückzahl von Schittlängen gesammelt, bevor diese an die Sammel- und Transportvorrichtung weitergegeben wird. Sollte die Sollzahl der Unterlängen in der Sammelmulde oder auf dem Sammelrost vorher erreicht sein, wird die Sammelvorrichtung unter den Transportweg abgesenkt, so dass die Unterlängenlagen oder die Unterlängenbunde über den Transportweg Zur Weiterverarbeitung durchgeschleust werden können. Danach wird der Sammelhebel wieder hochgeschwenkt und kann mit Schnittlängen aufgefüllt werden.

Dadurch, dass am freien Ende des Sammelhebels, das der Transportrichtung entgegengerichtet ist, ein Schwenklager angeordnet ist, gestaltet sich das Absenken des Sammelhebels besonders einfach und verschleißarm, da ein Schwenklager gut schmier- und kapselbar ist.

Es ist weiterhin von Vorteil, dass parallel zu beiden Seiten des Sammelhebels entfernbare Gleitbahnen angeordnet sind, die bei versenktem Sammelhebel in dessen Bereich den Transportweg bilden. Wegen der Länge der Schnittlängen muss bei deren Absenken der gesamte Transportweg unterbrochen werden. Dazu dienen die entfernbaren Gleitbahnen.

Eine vorteilhafte Ausbildung der Erfindung besteht darin, dass die Gleitbahnen als die anderen kurzen Schenkel von Winkelhebel ausgebildet sind, während andere lange Schenkel vorzugsweise rechtwinklig auf den anderen kurzen Schenkein stehen und im Bereich ihres freien Endes ein anderes Schwenklager sowie ein beide Winkelhebel verbindendes Verbindungselement aufweisen. Im Vergleich zu seitlich verschiebbaren Gleitbahnen sind die nach unten schwenkbaren analog zum schwenkbaren Sammelhebel besonders einfach und robust ausgebildet sowie aufgrund der gut schmier- und kapselbaren anderen Schwenklager nur geringem Verschleiß unterworfen. Das Verbindungselement synchronisiert die Schwenkbewegung der Winkelhebel. An ihn können hydraulische, pneumatische oder elektrische Schwenkeinrichtungen angreifen.

Dadurch, dass die Gleitbahnen entgegen der Transportrichtung wegschwenkbar sind, weichen diese dem abgesenkten Sammelhebel mit den Schnittlängen aus, so dass sie über diesen hinweg wieder in den Transportweg schwenkbar sind und das Durchschleusen der Unterlängen ermöglichen.

Es hat Vorteile, dass die Bewegungen von Sammelhebel, Sammelmulde und Winkelhebel aufeinander abgestimmt sind. Durch eine genaue Abfolge der Schwenkbewegungen dieser Elemente ist ein rascher und störungsfreier Transport der Schnittlängen und Unterlängen durch die Adjustage sichergestellt.

Weitere Einzelheiten und Merkmale ergeben sich aus den Ansprüchen, der folgenden Beschreibung und der Zeichnung, in der ein Ausführungsbeispiel der Erfindung schematisch dargestellt ist.

Es zeigen:

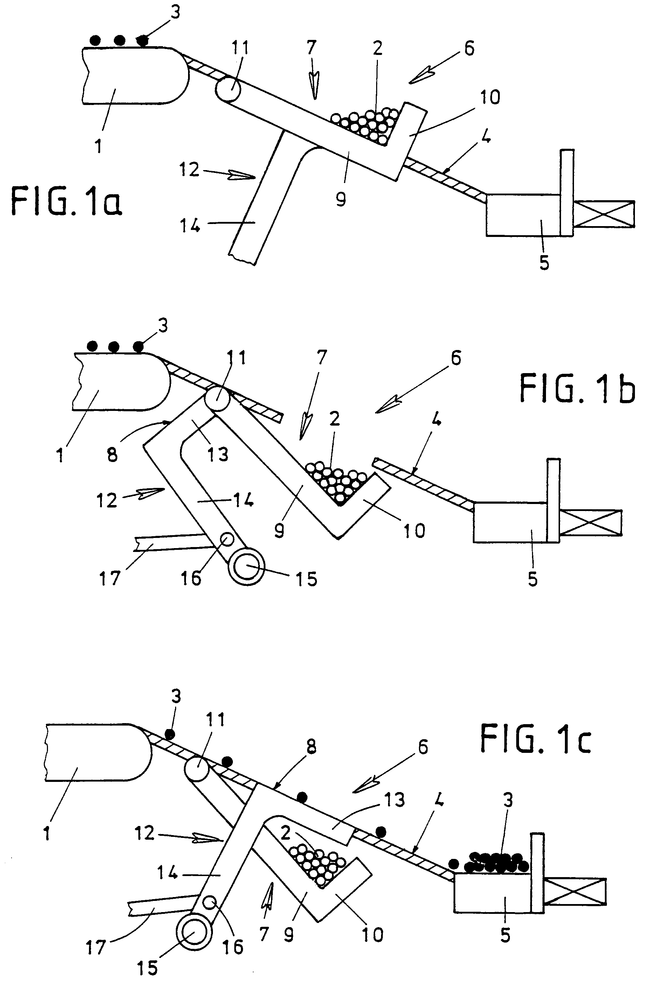

- Fig. 1a: einen Schnitt durch eine Sammelvorrichtung mit einem Sammelhebel und Gleitbahnen in Grundstellung,
- Fig. 1b: wie Fig. 1a, jedoch mit dem Sammelhebel und den Gleitbahnen in abgesenkter Stellung,
- Fig. 1c: wie Fig. 1b, jedoch die Gleitbahnen in Übergabe- bzw. Grundstellung zurückgeschwenkt.

Figur 1a zeigt eine Transportkette (1), die Schnittlängen (2) und Unterlängen (3) von einer nicht dargestellten Kaltschere zu einem geneigt angeordneten Transportweg (4) fördert. Dieser führt zu einem Rollgang oder zu einem Muldentragschlepper (5), der das Walzgut zu nicht dargestellten Bündelanlagen und Sageeinrichtungen transportiert.

Im Transportweg (4) befindet sich eine Sammelvorrichtung (6) für Schnittlängen. Sie besteht aus einem winkelförmigen Sammelhebel (7) und zwei Gleitbahnen (8). Der Sammelhebel besitzt einen langen Schenkel (9) und einen kurzen Schenkel (10), die senkrecht aufeinanderstehen. Der lange Schenkel (9) weist an seinem freien Ende ein Schwenklager (11) auf, um dass der Sammelhebel (7) nach unten und damit gegen die Transportrichtung schwenkbar ist. Bei Sammelstellung des Sammelhebels (7) liegt der lange Schenkel (9) in der Ebene des Transportwegs (4), während der kurze Schenkel (10) über diesen hinausragt.

Die Gleitbahnen (8) liegen parallel zu beiden Seiten des Sammelhebels (7). Sie sind als Teil von Winkelhebel (12), und zwar als deren andere kurze Schenkel (13) ausgebildet. Die dazugehörigen anderen langen Schenkel (14) stehen senkrecht auf den anderen kurzen Schenkein (13) und besitzen im Bereich ihrer freien Enden andere Schwenklager (15) und ein beide Winkelhebel (12) verbindendes Verbindungselement (16). An diesem greift eine hydraulische Verstelleinrichtung (17) an. Auch der Sammelhebel (7) wird hydraulisch geschwenkt.

In Figur 1b sind der Sammelhebel (7) und die Winkelhebel (12) in abgesenkter Stellung dargestellt. Beide befinden sich unterhalb des Transportwegs (4). Dieser ist dadurch zwar frei aber noch nicht geschlossen.

Figur 1c zeigt den freien und geschlossenen Transportweg (4), bei denen sich der Sammelhebel (7) in abgesenkter Stellung und die Winkelhebel (12) in übergabestellung befinden.

Die erfindungsgemäße Vorrichtung funktioniert folgendermaßen: In Fig. 1a befinden sich einige Schnittlängen (2) im Sammelhebel (7). Da deren Sollstückzahl bzw. Bundgewicht noch nicht erreicht ist, werden diese Schnittlängen (2) noch nicht weiter transportiert. Andererseits liegen auf der Transportkette (1) Unterlängen (3) in Lagen oder als Bunde bereit zum Weitertransport. Deshalb werden zuerst die Winkelhebel (12) und anschließend der Sammelhebel (7) mit den Schnittlängen (2) durch die gebildete öffnung abgesenkt. Dann werden die Winkelhebel (12) wieder hochgeschwenkt, so dass ein geschlossener Transportweg gebildet wird. Darüber werden die Lagen und Bunde der Unterlängen (3) zu dem Rollgang bzw. Muldentragschlepper (5) gefördert und können so die komplette Adjustage mit Bündeleinlagen und Sägeeinrichtungen durchlaufen. Anschließend werden die Winkelhebel (12) abgesenkt, um nach Anheben des Sammelhebels (7) wieder angehoben zu werden. Dann werden die Schnittlängen (2) bis zur Sollstückzahl aufgefüllt und anschließend zu den Bündelanlagen und Sägeeinrichtungen transportiert. Somit wird das gesamte Walzgut automatisch über die Adjustage geleitet.

Selbstverständlich ist die erfindungsgemäße Vorrichtung auch bei anderen Stangenmaterialien mit Schnitt- und Unterlängen anwendbar.

## Patentansprüche

1. Verfahren zum Handhaben von Schnittlängen (2) und Unterlängen (3) von vorzugsweise nicht stapelbarem Walzgut auf dem Wege zu Sammel- und Transporteinrichtungen für Bündelanlagen und Sägeeinrichtungen in Feinstahladjustagen, **dadurch gekennzeichnet,** dass die Schnittlängen (2) und die Unterlängen (3) auf einem gemeinsamen Transportweg (4) zu den Sammel- und Transporteinrichtungen gelangen.

2. Vorrichtung zum Handhaben von Schnittlängen (2) und Unterlängen (3) von vorzugsweise nicht stapelbarem Walzgut auf dem Wege zu Sammel- und Transporteinrichtungen für Bündelanlagen und Sägeeinrichtungen in Feinstahladjustagen, **dadurch gekennzeichnet**, dass vor dem Transportweg (4) eine Sammelmulde oder ein Sammelrost für die Unterlängen (3) und im Transportweg (4) eine Sammelvorrichtung (6) für die Schnittlängen (2) angeordnet sind und dass die Sammelvorrichtung (6) im Transportweg (4) versenkbar ausgebildet ist.

3. Vorrichtung nach Anspruch 2, **dadurch gekennzeichnet**, dass die Sammelvorrichtung (6) einen winkelförmigen, nach unten und gegen die Transportrichtung schwenkbaren Sammelhebel (7) aufweist, dessen langer Schenkel (9) bei Sammelstellung in der Ebene des Transportwegs (4) angeordnet ist, den ein kurzer Schenkel (10) überragt.

4. Vorrichtung nach Anspruch 3, **dadurch gekennzeichnet,** dass am freien Ende des Sammelhebels (7), das der Transportrichtung entgegengerichtet ist, ein Schwenklager (11) angeordnet ist.

5. Vorrichtung nach Anspruch 3 oder 4, **dadurch gekennzeichnet**, dass parallel zu beiden Seiten des Sammelhebels (7) entfernbare Gleitbahnen angeordnet sind, die bei versenktem Sammelhebel (7) in dessen Bereich den Transportweg (4) bilden.

6. Vorrichtung nach Anspruch 5, **dadurch gekennzeichnet**, dass die Gleitbahnen (8) als die anderen kurzen Schenkel von Winkelhebeln (12) ausgebildet sind, deren andere lange Schenkel (14) vorzugsweise rechtwinklig auf den anderen kurzen Schenkeln (13) stehen und die im Bereich ihres freien Endes ein anderes Schwenklager (15) sowie ein beide Winkelhebel (12) verbindendes Verbindungselement (16) aufweisen.

7. Vorrichtung nach Anspruch 6, **dadurch gekennzeichnet**, dass die Gleitbahnen (8) entgegen der Transportrichtung wegschwenkbar sind.

8. Vorrichtung nach einem oder mehreren der Ansprüche 3 bis 7, **dadurch gekennzeichnet**, dass die Bewegungen von Sammelhebel (7), Sammelmulde und Winkelhebel (12) aufeinander abgestimmt sind.
